## Europäisches Patentamt
## European Patent Office
## Office européen des brevets

(11) Veröffentlichungsnummer: **0 075 661**
**A2**

(12) **EUROPÄISCHE PATENTANMELDUNG**

(21) Anmeldenummer: 82106151.2

(22) Anmeldetag: 09.07.82

(51) Int. Cl.$^3$: **G 06 F 11/16**

(30) Priorität: 30.09.81 DE 3138875

(43) Veröffentlichungstag der Anmeldung:
06.04.83 Patentblatt 83/14

(84) Benannte Vertragsstaaten:
AT BE CH FR GB IT LI LU NL SE

(71) Anmelder: Starkstrom Gummersbach GmbH
D-5277 Marienheide-Rodt(DE)

(72) Erfinder: Lemmer, Helmut
Bleibergstrasse 16
D-5277 Marienheide-Kalsbach(DE)

(72) Erfinder: Marks, Günter
Schulstrasse 47B
D-5270 Gummersbach 31(DE)

(74) Vertreter: Köhne, Friedrich, Dipl.-Ing.
Postfach 250265 Lothringer Strasse 81
D-5000 Köln 1(DE)

(54) Vorrichtung zur Schnellbefestigung von elektrischen Geräten an Normtragschienen.

(57) Elektrische Geräte, insbesondere Schaltgeräte, werden in der Praxis in großem Umfang reihenweise nebeneinander und/oder übereinander auf Schalttafeln, in Schaltschränken oder auf sonstigen Montageplatten angeordnet, und zwar an Normtragschienen.

Um eine Vorrichtung zur Schnellbefestigung dieser Geräte an den Normtragschienen zu schaffen, die allen Bedingungen der Praxis gerecht wird und die es ermöglicht, alle Geräte, wo sie auch auf der betreffenden Montagewand räumlich angeordnet sein mögen, einfach zu befestigen und zu lösen, wird vorgeschlagen, daß auf der Befestigungsseite jedes Gerätes ein in seiner Längsrichtung verschiebbarer Schieber vorgesehen ist, der mit seinen beiden Enden in Ruhestellung soweit vorsteht, daß die Verschiebebewegung wahlweise von dem einen oder anderen Ende aus vornehmbar ist, und daß auf der Befestigungsseite mit Abstand und zu beiden Seiten des Schiebers je ein festes Haltestück für den Rand des einen Flansches der Normtragschiene und auf dem Schieber ein weiteres Haltestück für den Rand des anderen Flansches der Normtragschiene vorgesehen ist.

FIG. 1

- 1 -

## Vorrichtung zur Schnellbefestigung von elektrischen Geräten an Normtragschienen

Die Erfindung bezieht sich auf eine Vorrichtung zur Schnellbefestigung von elektrischen Geräten, insbesondere Schaltgeräten, an Normtragschienen.

Elektrische Geräte, insbesondere Schaltgeräte, werden in der Praxis in großem Umfang reihenweise nebeneinander und/oder übereinander auf Schalttafeln, in Schaltschränken oder auf sonstigen Montageplatten angeordnet. Die elektrischen Geräte kann man allgemein als Befehls- oder Meldegeräte bezeichnen. Als Beispiel seien Schützensteuerungen genannt, die aus zahlreichen dicht nebeneinander angeordneten Schützen bestehen. Zum Befestigen dieser Geräte verwendet man vielfach sogenannte Normtragschienen, die ihrerseits in geeigneter Weise auf der betreffenden Montageplatte oder dergleichen angeordnet sind.

Zur Vereinfachung der Montage bzw. Befestigung hat man bereits Konstruktionen mit einer Art Schnappverschluß vorgeschlagen, die aber allesamt den Nachteil mit sich bringen, daß sie für den Monteur schwer zugänglich sind. Das Betätigen eines solchen Schnappverschlusses, also beispielsweise das Lösen eines Gerätes von der Normtragschiene, kann nämlich nur von einer Geräteseite aus erfolgen, also bei waagerechter Anordnung der Normtragschienen beispielsweise an einer vertikalen Montagewand kann man den Schnappverschluß entweder nur auf der Unterseite oder nur auf der Oberseite des Gerätes erreichen. Wenn also die Schnappverschlüsse bei sämtlichen Geräten einheitlich auf der Unterseite vorgesehen sind, so ist es für den Monteur außerordentlich mühsam, die vielen Geräte in den unteren Reihen einer Montagewand zu befestigen bzw. zu lösen. Es kommt hinzu, daß es in der Praxis vielfach erforderlich ist, die einzelnen Geräte mit Zusatzgeräten, z.B. irgendwelchen Schutzgeräten zu versehen, die dann überstehen und die Betätigung des Schnappverschlusses geradezu unmöglich machen. Da die Geräte, wie gesagt, meist in waagerechten Reihen dicht nebeneinander angeordnet sind, werden die elektrischen Anschlußleitungen nach der Ober- und Unterseite abgeführt, die das Zugänglichmachen der bisher bekannten Schnappverschlüsse zusätzlich behindern.

Der Erfindung liegt demgegenüber die Aufgabe zugrunde, eine Vorrichtung zur Schnellbefestigung von Geräten an Normtragschienen zu schaffen, die allen Bedingungen der Praxis gerecht wird und die es ermöglicht, alle Geräte, wo sie auch auf der betreffenden Montagewand räumlich angeordnet sein mögen, einfach zu befestigen und

- 3 -

zu lösen.

Die gestellte Aufgabe wird, ausgehend von der zu Anfang erläuterten Vorrichtung, erfindungsgemäß dadurch gelöst, daß auf der Befestigungsseite des Gerätes ein in seiner Längsrichtung verschiebbarer Schieber vorgesehen ist, der mit seinen beiden Enden in Ruhestellung so weit vorsteht, daß die Verschiebebewegung wahlweise von dem einen oder anderen Ende aus vornehmbar ist, und daß auf der Befestigungsseite mit Abstand und zu beiden Seiten des Schiebers je ein festes Haltestück für den Rand des einen Flansches der Normtragschiene und auf dem Schieber ein weiteres Haltestück für den Rand des anderen Flansches der Normtragschiene vorgesehen ist.

Vorteilhafte Ausgestaltungen der Erfindung ergeben sich aus den Unteransprüchen.

In der Zeichnung ist ein Ausführungsbeispiel der Erfindung im Schema dargestellt, und zwar zeigen

Figur 1 eine Ansicht auf die Befestigungsseite eines Gerätes und

Figur 2 einen Längsschnitt hierzu gemäß Schnittlinie II - II in Figur 1.

Bei dem in der Zeichnung dargestellten Ausführungsbeispiel ist das elektrische Gerät als solches im einzelnen nicht veranschaulicht, vielmehr ist nur ein Teil des Gehäuses 1 gezeichnet. Das Gehäuse besteht auf der Befestigungsseite 2 aus einem Boden, der im wesentlichen rechteckig ist und an dessen Rändern sich Seitenwände 3, 4, 5 und 6 anschließen. Auf der Unterseite des Bodens sind zweckmäßigerweise Verstärkungsrippen 7, 8, 9, 10 und 11 vorgesehen, um einmal die Stabilität des aus Kunststoff bestehenden Gehäuses zu erhöhen und zum anderen eine bessere Auflage zu schaffen, wenn das Gerät in anderer, an sich bekannter Weise mittels Schrauben, die durch die Bohrungen 47, 48 hindurchgeführt werden können, auf einer Trägerplatte befestigt werden soll. Diese übliche Befestigungsart ist also bei dem Ausführungsbeispiel des gezeichneten Gerätes ebenfalls gegeben.

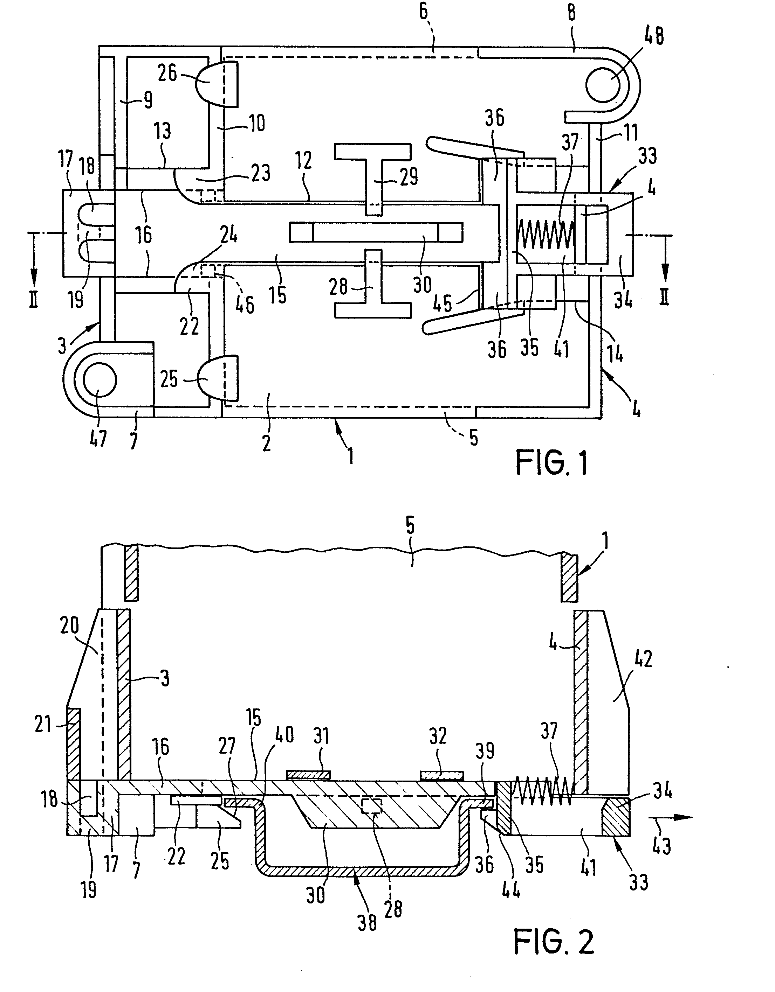

Die erfindungsgemäße Vorrichtung dient dagegen zur Schnellbefestigung des Gerätes an Normaltragschienen. Eine solche Normtragschiene 38 ist in Figur 2 im Querschnitt und in Befestigungsstellung des Gerätes dargestellt.

Auf der Befestigungsseite 2 des Gerätes ist ein in seiner Längsrichtung, und zwar in Richtung des Pfeiles 43 gemäß Figur 2, verschiebbarer Schieber 15 vorgesehen. Dieser Schieber 15 besteht vorteilhafterweise aus einem zähharten, verschleißfesten und bruchsicheren Kunststoff, kann aber auch aus einem anderen geeigneten Material hergestellt sein. Der Schieber steht, wie sowohl aus Figur 1 als auch aus Figur 2 hervorgeht, an seinen beiden Enden so weit gegenüber den eigentlichen Gehäusewänden 3 und 4

- 5 -

vor, daß beide Enden zugänglich sind, so daß
eine Verschiebebewegung des Schiebers 15
wahlweise von dem einen oder anderen Ende aus
bewirkt werden kann.

In besonders vorteilhafter Ausgestaltung der
Erfindung sind die Enden des Schiebers 15
rahmenförmig ausgebildet, so daß sie rechteckige Ausnehmungen 18 am linken Ende des
Schiebers und 41 am rechten Ende des Schiebers
aufweisen. Diese Ausnehmungen 18 bzw. 41 dienen
für den Einsatz eines nicht gezeichneten Werkzeuges, vornehmlich eines Schraubenziehers. Um
eine bessere Führung und Halterung des Schraubenziehers zu erreichen, ist außen an der Gehäusewand 3 ein, in Draufsicht zu Figur 2 gesehen,
U-förmiges Führungsteil 20 einstückig mit der
Gehäusewand 3 vorgesehen. Dieses U-förmige
Führungsteil ist noch in seinem unteren Ende
gemäß Figur 2 mit einem Anlagesteg 21 senkrecht zur Bildebene der Figur 2 geschlossen.
Außerdem ist die rechteckige Ausnehmung 18
im unteren Bereich mit einer kleinen mittleren
Rippe 19 versehen, an welcher ein Schraubenzieher beim Einsatz anstößt. Wenn man von oben
her in das U-förmige Führungsteil 20 ein Werkzeug, z.B. einen Schraubenzieher, einführt,
bis dessen Spitze in die Ausnehmung 18 gelangt,
so braucht man den Schraubenzieher nur entgegen dem Uhrzeigersinn etwas zu schwenken,
ggfs. bis zur Anlage an dem Anlagesteg 21, und
das ganze Ansatzstück 17 des Schiebers und
damit der Schieber selbst werden in Richtung

- 6 -

des Pfeiles 43 verschoben.

Der Gehäuseboden ist auf der Befestigungsseite 2 des Gerätes zweckmäßigerweise mit einem Längsschlitz 12 versehen, in welchen der Schieber 15 platzsparend eingesetzt ist. Der Schieber ist sodann auf der Ober- und Unterseite mittels Gleitführungen 22, 23 bzw. 28, 29 bzw. 31 und 32 gehalten und während der Verschiebebewegung geführt. Die Gleitführungen 22 und 23 kommen dadurch zur Wirkung, daß der Schieber 15 gemäß Figur 1 an seinem linken Ende eine Erweiterung 16 bzw. Verbreiterung bis zur Breite des Ansatzstückes 17 aufweist. In diesem Bereich hat der Längsschlitz 12 eine noch größere Verbreiterung 13. Die Ecken 24 der Gleitführungen 22, 23 sind zweckmäßigerweise abgerundet und übergreifen, gemäß Figur 1, einen Teil der Erweiterung 16 des Schiebers.

Im Bereich des anderen Endes des Schiebers 15 besitzt der Längsschlitz ebenfalls eine beiderseitige Erweiterung 14. Das rechte Ende des Schiebers ist vorteilhaft in Gestalt eines Rahmens 33 (Figur 1) ausgebildet, und zwar mit querverlaufenden Rahmenteilen 34 und 35. Das Rahmenteil 35 ist einstückig mit einem Haltestück 36 ausgebildet. Dieses Haltestück 36 des Schiebers 15 ist zweckmäßig zu beiden Seiten des Schiebers überstehend verbreitert.

Auf der Befestigungsseite 2 des Gehäuses sind nach Figur 1 mit Abstand und zu beiden Seiten des Schiebers 15 feste Haltestücke 25 und 26 einstückig mit dem Gehäuseboden verbunden. Diese Haltestücke besitzen Vorsprünge mit Schrägflächen 27, hinter welche der Rand des einen Flansches 40 der Normtragschiene 38 greifen kann. Der Rand des anderen Flansches 39 der Normtragschiene greift dagegen hinter das Haltestück 36 des Schiebers 15. Auch dieses Haltestück 36 ist zweckmäßigerweise mit einer Schrägfläche 44 versehen.

Mit besonderem Vorteil ist erfindungsgemäß zwischen dem Schieber 15 einerseits und einer Seitenwand des Gerätegehäuses 1, beim vorliegenden Ausführungsbeispiel der Seitenwand 4 andererseits eine Druckfeder 37 eingesetzt. Dabei ist die Druckfeder 37 zweckmäßigerweise im Bereich der einen rechteckigen bereits beschriebenen rechteckigen Ausnehmung 41 vorgesehen.

Der Schieber 15 ist noch zweckmäßigerweise auf der Außenseite, d.h. gemäß Figur 2 auf der Unterseite, und im mittleren Bereich mit einer Verstärkungsrippe 30 ausgestattet. Ebenso wie die Gehäusewand 3 ist auch außen an der Gehäusewand 4 ein etwa U-förmiges Führungsteil 42 zum erleichterten Einführen des Werkzeuges, z.B. eines Schraubenziehers, vorgesehen.

Schließlich ist es zweckmäßig, die Verschiebebewegung des Schiebers 15 durch beiderseitige Anschläge 45 und 46 zu begrenzen, wobei es sich versteht, daß die Verschiebewege des Schiebers 15 größer bemessen sind, als die Vorsprünge des Haltestückes 36 des Schiebers 15.

Die Wirkungsweise der oben erläuterten Vorrichtung ist im wesentlichen folgende. Zum Befestigen eines Gerätes an einer Normtragschiene 38 wird das Gehäuse 1 zunächst in einer leichten Schrägstellung entgegengesetzt zum Uhrzeigersinn zur Lage nach Figur 2 so angesetzt, daß die beiden Haltestücke 25 und 26 mit ihren Schrägflächen 27 hinter den Rand des Flansches 40 der Normtragschiene greifen. Sodann wird das Gehäuse im Uhrzeigersinn geschwenkt, wobei die Schrägfläche des Haltestücks 36 auf den Rand des anderen Flansches 39 trifft. Durch Wirkung der Schrägfläche 44 wird der Schieber 15 entgegen dem Druck der Druckfeder 37 in Richtung des Pfeiles 43 nach rechts verschoben, bis der Flansch 39 an dem Schieber 15 zur Anlage kommt. In dieser in Figur 2 gezeichneten Stellung kann die Druckfeder 37 den Schieber so weit wieder nach links verschieben, bis die Vorsprünge des Haltestückes 36 hinter den Rand des Flansches 39 greifen. Damit sitzt das Gerät fest. Zum Öffnen der Schnellbefestigung kann man nun je nach räumlichen Verhältnissen entweder einen Schraubenzieher in das Führungsteil 20 oder 42 bis zur Ausnehmung 18 oder 41 führen und sodann durch Drehen oder Schwenken des Schraubenziehers den Schieber in Richtung des Pfeiles 43 verschieben, bis der Rand des Flansches 39 wieder frei wird und das Gerät abgenommen werden kann.

- 1 -

Patentansprüche:

1. Vorrichtung zur Schnellbefestigung von elektrischen Geräten, insbesondere Schaltgeräten, an Normtragschienen,
dadurch gekennzeichnet,
daß auf der Befestigungsseite (2) des Gerätes ein in seiner Längsrichtung verschiebbarer Schieber (15) vorgesehen ist, der mit seinen beiden Enden in Ruhestellung so weit vorsteht, daß die Verschiebebewegung wahlweise von dem einen oder anderen Ende aus vornehmbar ist
und daß auf der Befestigungsseite (2) mit Abstand und zu beiden Seiten des Schiebers (15) je ein festes Haltestück (25, 26) für den Rand des einen Flansches (40) der Normtragschiene (38) und auf dem Schieber (15) ein weiteres Haltestück (36) für den Rand des anderen Flansches (39) der Normtragschiene (38) vorgesehen ist.

2. Vorrichtung nach Anspruch 1,
dadurch gekennzeichnet,
daß die Enden des Schiebers (15) rahmenförmig ausgebildet sind und rechteckige Ausnehmungen (18, 41) für den Einsatz eines Werkzeuges, wie eines Schraubenziehers, aufweisen.

3. Vorrichtung nach Anspruch 1 oder 2,
dadurch gekennzeichnet,
daß die Befestigungsseite (2) des Gerätes einen Gehäuseboden mit einem Längsschlitz (12) aufweist, in welchen der Schieber (15)

- 2 -

eingesetzt ist,

und daß auf der Ober- und Unterseite des
Schiebers (15) Gleitführungen (22, 23, 28, 29,
31, 32) vorgesehen sind.

4. Vorrichtung nach einem der Ansprüche 1 bis 3,
dadurch gekennzeichnet,
daß die Haltestücke (25, 26, 36) mit Schrägflächen (27, 44) versehen sind.

5. Vorrichtung nach einem der vorhergehenden
Ansprüche,
dadurch gekennzeichnet,
daß zwischen dem Schieber (15) einerseits und
einer Seitenwand (4) des Gerätegehäuses (1)
andererseits eine Druckfeder (37) vorgesehen
ist.

6. Vorrichtung nach Anspruch 5,
dadurch gekennzeichnet,
daß die Druckfeder (37) im Bereich der einen
rechteckigen Ausnehmung (41) vorgesehen ist.

7. Vorrichtung nach einem der vorhergehenden
Ansprüche,
dadurch gekennzeichnet,
daß der Schieber (15) auf der Außenseite,
im mittleren Bereich eine Verstärkungsrippe
(30) aufweist.

8. Vorrichtung nach einem der vorhergehenden
Ansprüche,
dadurch gekennzeichnet,
daß das Haltestück (36) des Schiebers (15)

- 3 -

zu beiden Seiten des Schiebers überstehend
verbreitert ist.

9. Vorrichtung nach einem der vorhergehenden
   Ansprüche,
   dadurch gekennzeichnet,
   daß die Verschiebebewegung des Schiebers (15)
   durch beiderseitige Anschläge (45, 46) begrenzt ist.

FIG. 1

FIG. 2